# DEMANDE DE BREVET EUROPEEN

(11) **EP 4 535 587 A1**
(43) Date de publication de la demande: **09.04.2025**
(21) Numéro de dépôt: 24204178.8
(22) Date de dépôt: 02.10.2024
(51) Int. Cl.: H02G 7/22, E04H 12/18, F16B 7/10, H01Q 1/12, H02G 11/00

(54) **ORGANE DE MAINTIEN DE CÂBLES, NOTAMMENT POUR UN MÂT TÉLESCOPIQUE**

(30) Priorité: 02.10.2023 FR 2310506
(71) Demandeur: THALES, 92190 Meudon (FR)
(72) Inventeur: RIMBAULT, Damien, 49309 Cholet (FR); BASLE, Eric, 49309 Cholet (FR)
(74) Mandataire: Lavoix

(57) **Abrégé**

La présente invention concerne un organe (18) de maintien de câbles pour un mât (10), notamment un mât télescopique, comportant : - une base (20) fixée à l'un des tronçons (12), - une partie pivotante (22), reliée à la base (20) par une liaison pivot d'axe perpendiculaire à l'axe de mât (Z), et - un collier (26), solidaire de la partie pivotante (22), et enserrant chaque câble (16).

## Description

La présente invention concerne un organe de maintien de câbles, notamment pour un mât télescopique comprenant à son sommet un équipement relié à la base du mât par ces câbles.

L'équipement est par exemple une antenne.

Un tel mât télescopique nécessite au moins un câble parcourant le mât jusqu'à l'équipement.

Toutefois, le comportement des câbles est souvent difficile à anticiper, lors du déploiement ou du repliement du mât télescopique, en raison de leurs rayons de courbure, de leurs diamètres et de la hauteur du mât. Ainsi, il n'est pas possible, dans l'état de la technique, de garantir la répétabilité de la position des cordons.

En outre, les câbles étant tirés vers le bas par leur poids, il apparait que le poids de ces câbles est mal réparti d'un tronçon à l'autre.

L'invention a notamment pour but de remédier à cet inconvénient, en proposant un organe de maintien capable de guider les câbles pendant les manoeuvres du mât, tout en optimisant leur encombrement lorsque le mât est replié. Un tel mât devrait proposer un guidage répétable des câbles, c'est-à-dire que les câbles doivent retrouver la même disposition en fonction du déploiement du mât et être stables dans ces dispositions quelle que soit la position du mât.

A cet effet, l'invention a pour objet un organe de maintien de câbles pour un mât, notamment un mât télescopique, caractérisé en ce qu'il comporte :
- une base fixée à l'un des tronçons,
- une partie pivotante, reliée à la base par une liaison pivot d'axe perpendiculaire à l'axe de mât, et
- un collier, solidaire de la partie pivotante, et enserrant chaque câble.

Les organes de maintien forment des colliers pivotants, agencés le long du mât et sur chaque tronçon de mât, de sorte que le comportement des câbles lors du déploiement et du repliement du mât soient répétables. Les colliers pivotants permettent d'accompagner les câbles de manière naturelle et en répartissant de manière uniforme leurs poids le long du mât. De plus, cette solution permet de ne pas couder les câbles, ni de les sur-contraindre.

L'avantage de cette solution est que les câbles sont bien maintenus, l'ensemble étant stable et répétable.

Suivant d'autres aspects avantageux de l'invention, le mât comprend une ou plusieurs des caractéristiques suivantes, prises isolément ou suivant toutes les combinaisons techniquement possibles :
- La partie pivotante comporte des tiges filetées s'étendant parallèlement à l'axe de la liaison pivot, et le collier comporte des passages de réception des tiges filetées, des écrous étant vissés sur l'extrémité des tiges filetées pour leur verrouillage avec le collier.
- Le collier est formé en deux parties comportant chacune, pour chaque câble, un évidement, par exemple semi-circulaire, pour la réception de ce câble, chaque câble étant enserré entre les deux parties.
- Le collier comporte un orifice central destiné à recevoir un raidisseur de guidage des câbles.

L'invention concerne également un mât, notamment télescopique, s'étendant le long d'un axe de mât, et portant au moins un équipement, et comprenant au moins un câble courant le long du mât, le mât comprenant au moins deux tronçons, caractérisé en ce que le mât comporte au moins un organe de maintien de chaque câble, tel que défini précédemment.

Par exemple, l'équipement est une antenne.

De préférence, chaque câble s'étend s'étendent sensiblement hélicoïdalement autour de l'axe de mât.

Différents aspects et avantages de l'invention seront mis en lumière dans la description qui va suivre, donnée uniquement à titre d'exemple non limitatif, et faite en référence aux dessins dans lesquels :
[Fig. 1] la figure 1 est une vue de profil d'un mât selon un exemple de mode de réalisation de l'invention ;
[Fig 2] la figure 2 est une vue de dessus d'un organe de maintien de câble équipant le mât de la figure 1 ;
[Fig 3] la figure 3 est une vue en perspective d'une liaison entre un organe de maintien et le mât ;
[Fig 4] la figure 4 est une vue en perspective d'une étape de montage de l'organe de maintien ;
[Fig 5] la figure 5 est une vue en perspective d'une étape de montage de l'organe de maintien, ultérieure à celle de la figure 4.

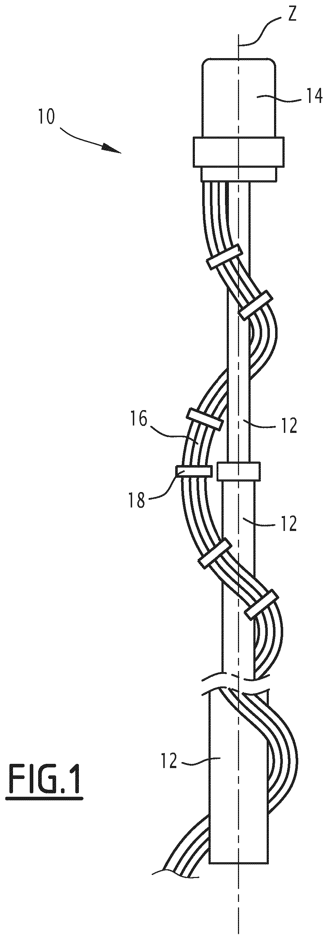

On a représenté, sur la figure 1, un mât 10, notamment un mât télescopique 10 selon un exemple de mode de réalisation de l'invention.

Le mât 12 comporte une pluralité de tronçons 12 coaxiaux le long d'un axe Z, et assemblés pour pouvoir coulisser les uns dans les autres de manière télescopique, de manière classique.

Le mât 12 porte au moins un équipement 14, par exemple à son sommet. L'équipement 14 peut être de tout type envisageable, par exemple il forme une antenne.

Le mât 12 comporte par ailleurs au moins un câble 16, par exemple deux câbles, le parcourant depuis le sol jusqu'à l'équipement 14. Les câbles 16 s'étendent sensiblement parallèlement l'un par rapport à l'autre.

Dans l'exemple décrit, les câbles 16 s'étendent sensiblement hélicoïdalement autour de l'axe Z, le long de cet axe Z.

Afin de maintenir et guider les câbles 16 de manière répétable lors du déploiement ou du repliement du mât 10, ce mât 10 comporte des organes 18 de maintien des câbles 16.

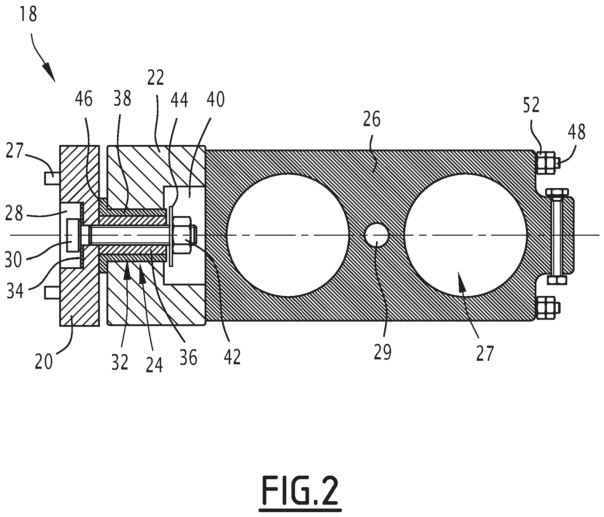

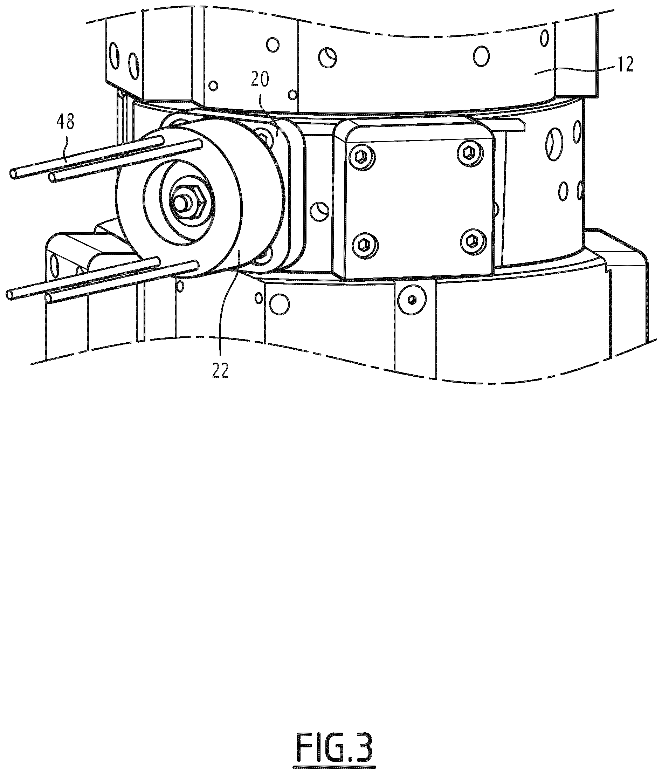

Tous les organes de maintien 18 sont identiques, si bien qu'un seul sera décrit en détail, en référence aux figures 2 à 5.

L'organe de maintien 18 comporte une base 20 destinée à être fixée à un tronçon 12 du mât 10.

L'organe de maintien 18 comporte par ailleurs une partie pivotante 22, reliée à la base 20 par une liaison pivot 24 d'axe perpendiculaire à l'axe Z du mât.

L'organe de maintien 18 comporte également un collier 26, solidaire de la partie pivotante 22, et enserrant chaque câble 16.

La base 20 présente par exemple la forme d'une plaquette sensiblement rectangulaire ou carrée, fixée au tronçon 12 correspondant à un emplacement prévu à cet effet, notamment par vissage. Par exemple, la base 20 présente des orifices de passage de vis 27, et le tronçon 12 comporte également des orifices taraudés de réception de ces vis 27.

La base 20 comporte également, du côté destiné à être plaqué contre le tronçon 12, un premier renfoncement 28 recevant une tête 30 d'une tige filetée 32. La base 20 comporte donc un orifice de passage de cette tige filetée 32, et la tête 30 vient reposer sur un contour de cet orifice de passage, par l'intermédiaire d'une première rondelle 34.

La tige filetée 32 s'étend perpendiculairement à la base 20, le long de l'axe de la liaison pivot 24.

De préférence, la tige filetée 32 s'étend depuis le centre de la base 20.

La partie pivotante 22 présente par exemple une forme générale cylindrique.

La partie pivotante 22 comporte une ouverture centrale recevant un palier formant la liaison pivot 24.

La liaison pivot 24 comporte un manchon interne 36, entourant la tige filetée 32, un manchon externe 38 entourant le manchon interne 36, et disposé dans l'ouverture centrale de la partie pivotante 22.

La partie pivotante 22 comporte un second renfoncement 40 recevant un écrou 42 vissé à l'extrémité de la tige filetée 32, à l'opposé de la tête de tige 30. L'écrou 42 prend appui sur une seconde rondelle 44.

Le manchon interne 36 est enserré entre la base 20 et la seconde rondelle 44.

Le manchon externe 38 est également enserré entre la base 20 et la seconde rondelle 44. Le manchon externe 38 comporte par ailleurs une collerette 46 s'étendant radialement, et disposée longitudinalement entre la base 20 et la partie pivotante 22.

Le manchon externe 38 présente une surface extérieure glissante, permettant la rotation de la partie pivotante 22 autour de l'axe de la liaison pivot 24.

Comme cela est représenté sur la figure 2, la partie pivotante 22 comporte des tiges filetées 48 de fixation du collier 26.

Les tiges filetées 48 s'étendent parallèlement à l'axe de la liaison pivot 24, donc perpendiculairement à l'axe Z du mât 10.

Le collier 26 comporte des passages 50 de réception des tiges filetées 48, à travers lesquels passent les tiges filetées 48. Des écrous 52 sont vissés sur l'extrémité des tiges filetées 48 pour leur verrouillage avec le collier 26.

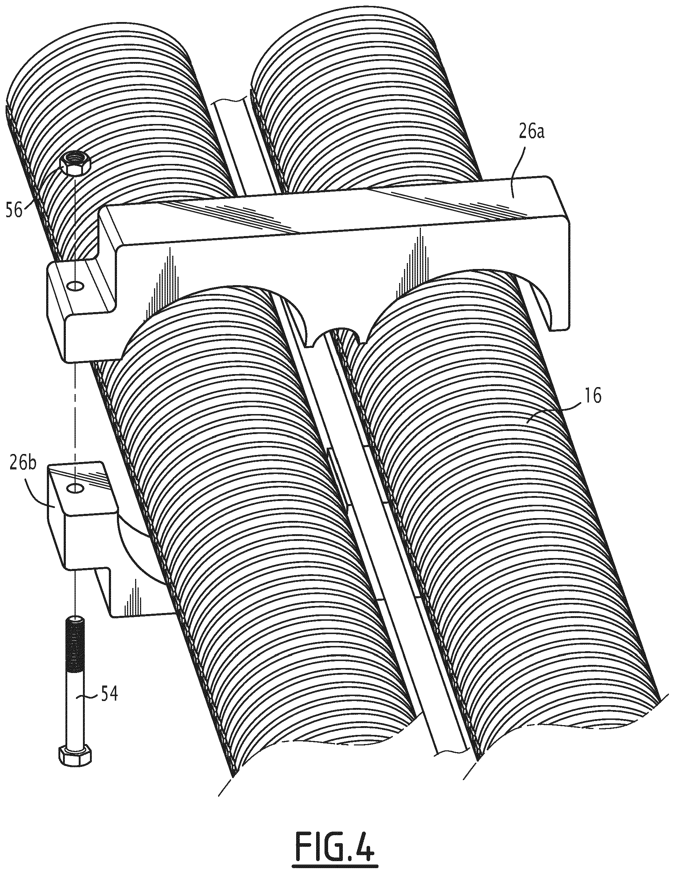

Avantageusement, le collier 26 est formé en deux parties 26a, 26b, comme cela est représenté sur la figure 4. Chaque partie 26a, 26b comporte, pour chaque câble 16, un évidement 27, par exemple semi-circulaire, pour la réception de ce câble 16.

Les parties 26a, 26b sont donc assemblées autour des câbles 16 en disposant les câbles 16 dans les évidements. Les parties 26a, 26b comportent au moins un orifice de passage d'une vis 54 pour la fixation de ces parties 26a, 26b entre elles, avec un écrou 56 vissé sur la vis 54.

Le collier 26 comporte également, de préférence, un orifice central 29 délimité par les deux parties 26a, 26b, s'étendant parallèlement aux évidements 27 de passage de câbles. L'orifice central 29 est destiné à recevoir un raidisseur (non représenté), par exemple une aiguille de fibre de verre, aidant à guider les câbles en hélicoïde.

Un procédé de montage de l'organe de maintien 18 sur le mât 10 va maintenant être décrit.

Les tronçons 12 du mât 10 et l'équipement 14 sont classiques et montés de manière connue en soi.

Les câbles 16 sont mis en place, en les connectant à l'équipement 14, et en les faisant courir le long du mât 10, en les enroulant hélicoïdalement autour de l'axe Z du mât. Les câbles 16 sont de préférence mis en place sensiblement parallèlement l'un par rapport à l'autre.

Le montage des organes de maintien se fait en trois parties. Dans un premier temps, la base 20, équipée de l'axe (formée par la tige filetée 32 et le manchon interne 36) est fixée à l'un des tronçons. Dans un second temps, la partie pivotante 22 est fixée sur la base 20. Dans un troisième temps, le collier 26 est fixé en serrant les câbles 16.

La fixation de la base 20 est assurée par les vis 27.

Une fois la base 20 assemblée avec le tronçon 12, la partie pivotante 22 est fixée sur la base 20 à l'aide de la rondelle 44 et de l'écrou 42. Les quatre tiges filetées 48 sont ensuite vissées dans la partie pivotante 22. Par exemple, la partie pivotante 22 comporte des orifices taraudés dans lesquels les tiges filetées 48 sont vissées.

Comme cela est représenté sur la figure 4, le collier 26 est mis en place autour des câbles 16 en refermant les parties 26a, 26b sur ces câbles 16. Les parties 26a, 26b sont ensuite fixées entre elles grâce à la vis 54 et l'écrou 56.

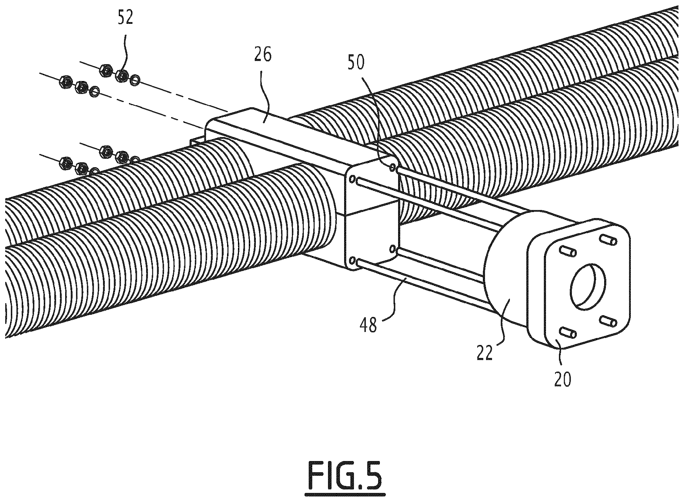

Comme cela est représenté sur la figure 5, les tiges 48 sont ensuite passées dans les passages 50 du collier 26, et fixées par les écrous 52.

Une pluralité d'organes de maintien 18 sont ainsi mis en place le long du mât 10, en suivant le trajet hélicoïdal des câbles 16. Cette mise en place peut s'effectuer progressivement, en déployant progressivement le mât 10 au fur et à mesure de l'installation des organes de maintien 18.

Les câbles 16 sont ainsi maintenus, radialement à distance des tronçons 12.

Grâce à la partie pivotante 22, le collier 26 est libre en rotation autour de l'axe de la liaison pivot 24. Cette rotation a lieu lors du déploiement ou le repliement du mât 10, en accompagnant naturellement le mouvement des câbles 16.

Cela permet de guider les câbles, évitant ainsi un coincement éventuel de ces câbles lors du repliement du mât. En outre, ce guidage est répétable, car la position angulaire de chaque collier 26 ne dépend ainsi que de la position du mat.

Enfin, il est à noter que les organes de maintien 18, répartis uniformément le long du mât, permettent de répartir uniformément le poids des câbles sur toute la hauteur du mât 10.

## Revendications

1. Organe (18) de maintien de câbles pour un mât (10), notamment un mât télescopique, **caractérisé en ce qu'**il comporte :
- une base (20) fixée à l'un des tronçons (12),
- une partie pivotante (22), reliée à la base (20) par une liaison pivot d'axe perpendiculaire à l'axe de mât (Z), et
- un collier (26), solidaire de la partie pivotante (22), et enserrant chaque câble (16).

2. Organe de maintien (18) selon la revendication 1, dans lequel la partie pivotante (22) comporte des tiges filetées (48) s'étendant parallèlement à l'axe de la liaison pivot (24), et le collier (26) comporte des passages (50) de réception des tiges filetées (48), des écrous (52) étant vissés sur l'extrémité des tiges filetées (48) pour leur verrouillage avec le collier (26).

3. Organe de maintien (18) selon la revendication 1 ou 2, dans lequel le collier (26) est formé en deux parties (26a, 26b) comportant chacune, pour chaque câble (16), un évidement (27), par exemple semi-circulaire, pour la réception de ce câble (16), chaque câble (16) étant enserré entre les deux parties (26a, 26b).

4. Organe de maintien (18) selon l'une quelconque des revendications précédentes, dans lequel le collier (26) comporte un orifice central (29) destiné à recevoir un raidisseur de guidage des câbles (16).

5. Mât (10), notamment télescopique, s'étendant le long d'un axe de mât (Z), et portant au moins un équipement (14), et comprenant au moins un câble (16) courant le long du mât (10), le mât (10) comprenant au moins deux tronçons (12), **caractérisé en ce que** le mât comporte au moins un organe (18) de maintien de chaque câble (16), selon l'une quelconque des revendications précédentes.

6. Mât (10) selon la revendication 5, dans lequel l'équipement est une antenne.

7. Mât (10) selon la revendication 5 ou 6, dans lequel chaque câble (16) s'étend s'étendent sensiblement hélicoïdalement autour de l'axe de mât (Z).
